# FASCICULE DE BREVET EUROPEEN

(11) **EP 0 491 603 B1**
(45) Date de publication et mention de la délivrance du brevet: **12.10.1994**
(21) Numéro de dépôt: 91403379.0
(22) Date de dépôt: 13.12.1991
(51) Int. Cl.: B60S 1/34

(54) **Dispositif de liaison entre un arbre d'entrainement et un bras d'essuie-glace, notamment pour véhicule automobile**
Verbindungsglied zwischen einem Scheibenwischerarm, insbesondere für Kraftfahrzeug
Link between windscreen wiper arm, in particular for an automotive vehicle

(30) Priorité: 18.12.1990 FR 9015856
(43) Date de publication de la demande: 24.06.1992
(73) Titulaire: VALEO SYSTEMES D'ESSUYAGE, 78180 Montigny-Le-Bretonneux (FR)
(72) Inventeur: Eustache, Jean-Pierre, F-92160 Antony (FR)
(74) Mandataire: Gamonal, Didier

(56) Documents cités:
- FR-A- 2 223 980

## Description

La présente invention se rapporte à un dispositif de liaison entre un arbre d'entraînement et un bras d'essuie-glace, notamment pour véhicule automobile.

Habituellement, le bras d'essuie-glace présente une tête d'entraînement comportant un alésage conique cranté intérieurement apte à coopérer avec une partie conique crantée extérieurement complémentaire portée par l'extrémité de l'arbre d'entraînement, cette partie conique crantée se poursuivant par une portion filetée utilisée pour la mise en place d'un écrou fileté pour le maintien, le positionnement angulaire et l'immobilisation du bras sur l'arbre après coopération des deux parties coniques crantées complémentaires.

Ce dispositif de liaison, bien que donnant jusqu'à maintenant satisfaction, présente néanmoins quelques inconvénients non négligeables.

En effet, lors des opérations d'assemblage entre la tête d'entraînement du bras d'essuie-glace et l'arbre d'entraînement, pour obtenir une position angulaire prédéterminée du bras d'essuie-glace, l'opération d'assemblage est effectuée manuellement de façon à ce que les saillies de l'alésage conique cranté coopèrent avec les creux de l'autre partie crantée complémentaire, ce qui ne peut se faire qu'après de multiples tentatives.

Ce problème est d'autant plus important que le bras d'essuie-glace n'est amené à coopérer avec l'arbre d'entraînement sur la chaîne de montage du véhicule concerné qu'après disposition de cet arbre d'entraînement sur la carrosserie du véhicule et il est nécessaire que le bras d'essuie-glace soit toujours situé dans la même position, généralement le plus près du bas du pare-brise, de façon à ce que l'angle de balayage procuré par l'arbre d'entraînement soit utilisé au maximum dans le champ de visibilité du conducteur.

De plus, dans le cas où il est prévu deux bras d'essuie-glace, il peut arriver que l'un des bras soit situé dans une position différente de l'autre des bras, ce qui ne peut que nuire à l'esthétique générale frontale du pare-brise.

Dans le cas où l'on veut obtenir exactement les mêmes positions des deux bras, l'opérateur doit procéder à de multiples opérations par tâtonnement pour obtenir sensiblement les deux mêmes positions ce qui ne peut qu'augmenter le temps de montage sur la chaîne.

La présente invention se propose de remédier aux inconvénients mentionnés ci-dessus en présentant un dispositif de liaison entre un bras d'essuie-glace et son arbre d'entraînement de conception très simple tout en permettant d'obtenir systématiquement la position angulaire souhaitée du bras d'essuie-glace.

Selon la présente invention un dispositif de liaison entre un bras d'essuie-glace présentant une tête d'entraînement et un arbre d'entraînement porté par un élément fixe est caractérisé en ce qu'un fourreau de positionnement comportant au moins un premier moyen de positionnement et un second moyen de positionnement est prévu entre la tête d'entraînement et l'élément fixe, en ce que le premier moyen de positionnement coopère avec la tête d'entraînement et en ce que le second moyen de positionnement coopère avec l'élément fixe de façon à ce que ledit second moyen de positionnement soit détachable du fourreau de positionnement lorsque le bras d'essuie-glace est en fonctionnement.

Grâce à ce fourreau, le bras sera positionné convenablement par rapport à son arbre d'entraînement.

Les autres caractéristiques et avantages de l'invention vont ressortir maintenant de la description qui va suivre en se référant aux dessins annexés sur lesquels :
- la figure 1 montre une vue en coupe partielle d'un dispositif de liaison selon la présente invention ;
- la figure 2 est une vue en coupe partielle selon la ligne AA de la figure 1 ;
- la figure 3 est une vue en coupe partielle selon la ligne BB de la figure 1 ;
- la figure 4 est une vue en coupe partielle montrant une variante de réalisation de l'invention ;
- la figure 5 est une vue en coupe partielle selon la ligne CC de la figure 4.

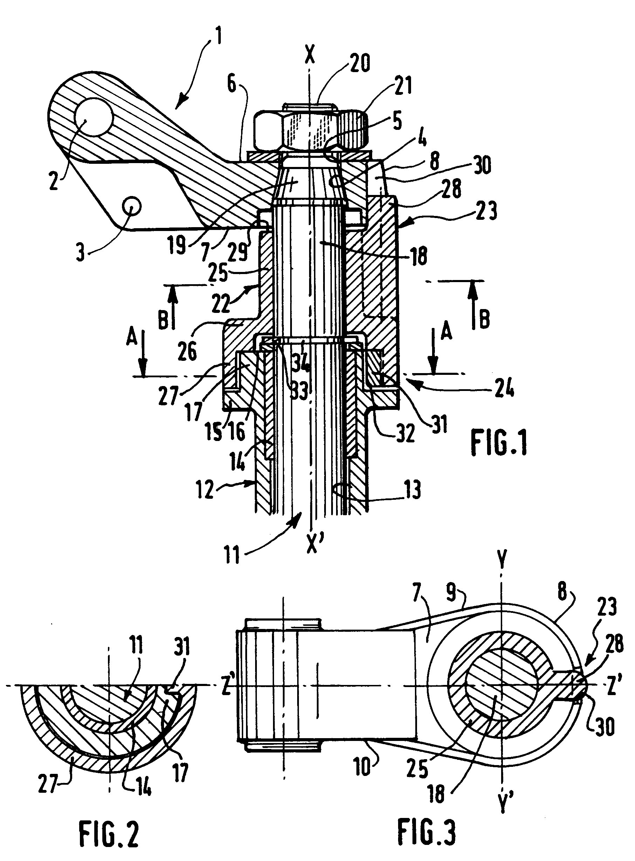

En se référant à la figure 1, un bras d'essuie-glace dont seule est représentée, pour des raisons de simplification de la description qui va suivre, la tête d'entraînement 1 qui présente un alésage 2 d'axe sensiblement perpendiculaire au plan de la feuille, et servant d'axe de pivotement pour le reste du bras d'essuie-glace qui porte à son autre extrémité un balai d'essuie-glace apte à parcourir une surface vitrée telle que le pare-brise d'un véhicule automobile, un alésage 3 sensiblement parallèle à l'alésage 2 et servant à l'accrochage d'un élément du bras d'essuie-glace, ici le ressort de compression ou d'extension, et un alésage 4, ici conique dont la conicité est telle que la petite base du cone est située vers le haut de la figure 1, disposé à distance des alésages 2 et 3 en étant prévu sensiblement perpendiculairement aux alésages 2, 3 et se poursuivant vers la partie haute de la figure 1 par un alésage circulaire 5 débouchant au-delà de la surface plane supérieure 6 de la tête d'entraînement 1 et au voisinage de la grande base de l'alésage conique 4 par un alésage 7 de plus grand diamètre que le plus grand diamètre de la partie basse de l'alésage conique 4 en venant aboutir sur la surface plane inférieure 7 de la tête d'entraînement 1.

En se référant à la figure 3, il peut être vu que le bord périphérique de la tête d'entraînement situé au voisinage de la l'alésage conique 4 présente une forme sensiblement semi-circulaire 8 se situant sur la partie droite de la figure 3, en étant concentrique à l'axe XX′ passant par le centre de l'alésage conique 4, cette partie sensiblement semi-circulaire 8 se poursuivant en direction de l'axe 2 et de l'axe 3 par une partie trapézoïdale 9 venant rejoindre la partie sensiblement rectangulaire 10 qui porte les alésages 2, 3.

Sur la figure 1 l'arbre d'entraînement 11 est logé dans une partie fixe 12 ici le support de palier qui est adapté à être rapporté d'une manière fixe sur un élément de la carrosserie du véhicule automobile en étant immobilisé sur celui-ci.

Ce support de palier ou fût, de forme tubulaire, présente un alésage intérieur 13 à l'intérieur duquel est logé un palier 14 sur lequel est amené à tourillonner l'arbre d'entraînement 11.

Sur la paroi extérieure du fût 12 est prévue une collerette 15 saillante extérieurement et apte à venir porter sur un élément fixe de la carrosserie en étant immobilisé par rapport à celle-ci, ce qui procurent un système de référence spatial dans lequel l'axe XX′ est également fixe et les axes YY′, ZZ′ orthogonaux à XX′ sont fixes (voir figure 3).

La collerette 15 se poursuit en direction de l'extrémité libre 16 du fût 12 par une partie circulaire 17 de plus grand diamètre extérieur que le diamètre extérieur du fût 12.

L'arbre 11 logé dans le fût 12 se poursuit au-delà de la partie d'extrémité 16 du fût 12 par un prolongement 18 de diamètre sensiblement égal au diamètre extérieur de l'arbre 11, ledit prolongement se poursuivant par une partie conique 19 de conicité sensiblement identique à la conicité de l'alésage conique 4 de la tête d'entraînement 1, ladite partie conique se poursuivant par une partie filetée 20 de diamètre sensiblement égal au petit diamètre de la partie conique et sur laquelle est apte à être rapporté un écrou 21.

Entre la tête d'entraînement 1 et le fût 12 est prévu un fourreau 22, dit fourreau de positionnement, qui porte un premier moyen de positionnement 23 et un deuxième moyen de positionnement 24.

Le fourreau de positionnement présente une partie tubulaire 25 disposée concentriquement avec le prolongement 18 de l'arbre 11 en étant disposée entre la surface inférieure 7 de la tête d'entraînement 1 et l'extrémité 16 du fût 12.

La partie tubulaire 25 présente au voisinage de l'extrémité 16 une collerette radiale 26 se poursuivant en direction de la collerette 15 du fourreau 12 par une partie tubulaire 27 venant entourer la surface annulaire 17 du fût 12.

En se référant aux figures 1 et 3, le premier moyen d'indexation porté par le fourreau consistent en une saillie, ici une protubérance 28, issue de l'extrémité libre 29 de la partie tubulaire 25 et se dirigeant vers la tête d'entraînement 1 en venant coopérer avec un logement 30 prévu dans la partie semi-circulaire 8 de ladite tête.

De manière préférentielle la protubérance 28 est disposée longitudinalement tout le long de la paroi tubulaire 25 de façon à prendre naissance sur la collerette 26 pour déboucher au-delà de l'extrémité libre 29 de la partie tubulaire 25.

En se référant maintenant conjointement aux figures 1 et 2, le second moyen d'indexation consiste en une saillie radialement interne 31 issue à partir de la surface interne de la partie tubulaire 27 et venant coopérer avec un logement, ici un évidement 32 pratiqué dans la partie annulaire 17 et cela au voisinage de l'extrémité libre 16.

En pratique la saillie 31 et l'évidement 32 sont disposées axialement et ont des formes et dimensions complémentaires.

Ainsi, lors du montage, le fût 12 est rapporté de manière fixe et immobilisé sur un élément de la carrosserie, l'arbre 11 avec son prolongement 18, sa partie conique 19 et sa partie filetée 20 est glissé à l'intérieur de l'alésage 2 du fût 12 en faisant coopérer la partie basse de l'arbre 11 avec le palier 14 puis cet arbre est immobilisé en translation axiale par rapport au fût par tout moyen tel qu'un circlips 33 disposé dans une gorge 34 située au voisinage de l'extrémité libre 16 et prévue dans le diamètre externe dudit arbre, le fourreau de positionnement 22 est ensuite glissé coaxialement autour du prolongement 18 de manière à ce que la partie tubulaire 27 vienne entourer la partie 17 du fût 12 en faisant coopérer la saillie 31 portée par la partie tubulaire 27 avec l'évidement 32 porté par le fût 12, le faisceau prenant appui parla face inférieure de la collerette 26, celle en regard de l'extrémité 16 du fût, sur l'extrémité 16 de ce fût en étant ainsi partiellement immobilisé en translation axiale, la tête d'entraînement 1 est ensuite rapportée axialement sur l'arbre 11 jusqu'à ce que son alésage conique 4 vienne coopérer avec la partie conique 19 de l'arbre 11 de manière à ce que le logement 30 prévu sur la tête d'entraînement vienne coopérer avec la saillie 28 portée par la partie tubulaire 25, puis l'écrou fileté 21 est amené autour de la tige filetée 20 et vissé jusqu'à ce que l'ensemble tête-arbre-fourreau soit immobilisé axialement les uns par rapport aux autres.

Dans cette configuration, la tête est immobilisée en rotation non seulement par rapport à l'arbre d'entraînement 11 mais aussi par rapport au fût 12 qui est une partie fixe par rapport à la carrosserie du véhicule.

Ainsi, lors de la première utilisation de bras d'essuie-glace, il est prévu que le second moyen de positionnement 24 soit d'une résistance moindre au cisaillement que le premier moyen de positionnement 23 de manière à ce que lorsque l'arbre d'entraînement 11 est soumis à un mouvement de rotation alternatif, tel qu'un mouvement de rotation d'essuyage, la saillie 28 reste dans son logement 30 et la saillie 31 ne résiste pas à l'effort transmis par l'arbre et se détache de la paroi tubulaire intérieure 27 du fourreau de positionnement 22 en restant logée dans l'évidement 32.

Ainsi, le fourreau de positionnement 22 permet d'avoir soit un positionnement du bras par rapport au fût lorsqu'il est envisagé de livrer l'ensemble tel que, soit de monter systématiquement dans la même position le bras par rapport au fût 12 et par conséquent par rapport à une partie du véhicule, telle que la partie basse d'un parebrise.

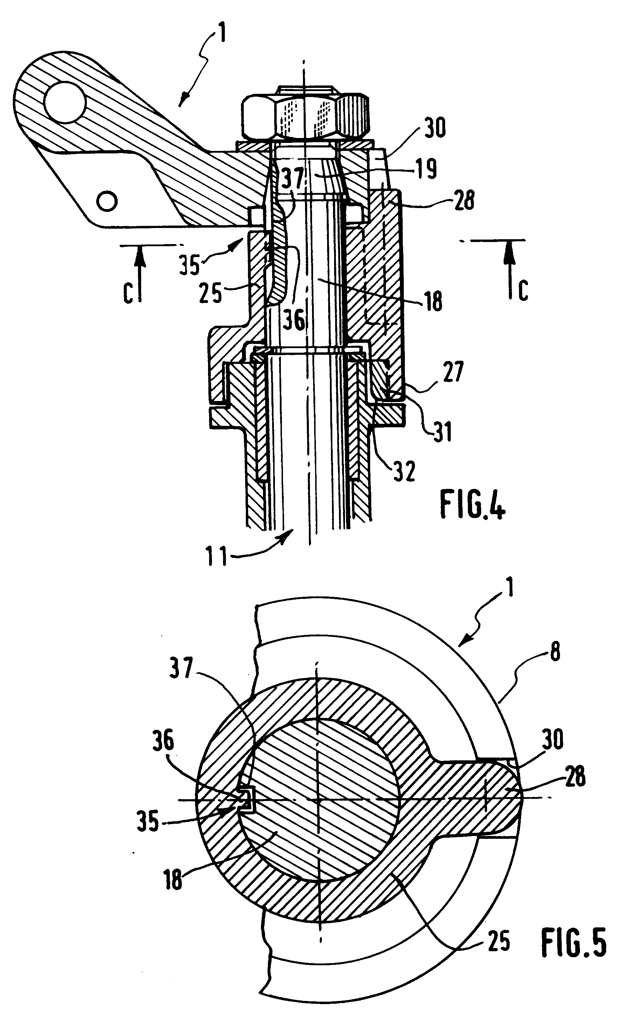

On se réfère maintenant aux figures 4 et 5 qui montrent une variante de réalisation de la figure 1 dans laquelle il est prévu un troisième moyen d'indexation 35 consistant en une saillie, ici une éminence 36 issue de la paroi interne de la partie tubulaire 25 et venant coopérer avec un logement, ici une rainure 37 prévue dans la paroi externe du prolongement 18.

Ainsi, après rupture de la saillie 31 par rapport à la paroi tubulaire 27, il est assuré une indexation complémentaire lorsqu'il est envisagé un remplacement du bras et un nouveau positionnement de ce bras par rapport à la partie fixe.

Ainsi, lors d'un éventuel changement, le fourreau de positionnement 22 restant en place sur le prolongement 18 en étant positionné déjà grâce à la coopération de l'éminence 36 avec la rainure 37, il suffit ensuite de rapporter le nouveau bras consituté d'une nouvelle tête d'entraînement 1 sur la partie conique 19 de l'arbre 11 pour obtenir, grâce à la coopération de la saillie 28 dans le logement 30 que porte ladite tête, la même position du nouveau bras par rapport à l'ancien.

La présente invention n'est pas limitée aux exemples de réalisation décrits mais englobe toutes variantes.

Notamment, il peut être prévu que la saillie 28 vienne coopérer avec un évidement prévu au voisinage de l'alésage 7 que présente la tête d'entraînement cette saillie étant ainsi confondue avec la paroi tubulaire 25.

## Revendications

1. Dispositif de liaison entre un bras d'essuie-glace présentant une tête d'entraînement (1) et un arbre d'entraînement porté par un élément fixe (12), caractérisé en ce qu'un fourreau de positionnement (22) comportant au moins un premier moyen de positionnement (23) et un second moyen de positionnement (24) est prévu entre la tête d'entraînement (1) et l'élément fixe (12), en ce que le premier moyen de positionnement (23) coopère avec la tête d'entraînement et en ce que le second moyen de positionnement (24) coopère avec l'élément fixe (12) de façon à ce que ledit second moyen de positionnement (24) soit détachable du fourreau de positionnement (22) lorsque le bras d'essuie-glace est en fonctionnement.

2. Dispositif de liaison selon la revendication 1, caractérisé en ce que le fourreau (22) comporte un troisième moyen de positionnement (35).

3. Dispositif de liaison selon l'une des revendications précédentes, caractérisé en ce que le second moyen de positionnement coopère avec le porte-palier (12) de l'arbre d'entraînement (11).

4. Dispositif de liaison selon l'une des revendications 2 à 3, caractérisé en ce que le troisième moyen de positionnement (35) coopère avec l'arbre d'entraînement (11).

5. Dispositif de liaison selon l'une des revendications précédentes, caractérisé en ce que les moyens de positionnement (23,24,35) sont constitués par des saillies (28,31,36) coopérant avec des logements (30,32,37).

6. Dispositif de liaison selon la revendication 5, caractérisé en ce que les saillies (28,31,36) sont portées par le fourreau de positionnement (22).

7. Dispositif de liaison selon l'une des revendications 5 ou 6, caractérisé en ce que les logements (30,32) sont portés respectivement par la tête d'entraînement (1) et l'élément fixe (22).

8. Dispositif de liaison selon l'une des revendications 5 à 7, caractérisé en ce que le logement (37) est porté par l'arbre d'entraînement (11).

## Claims

1. A link between a windshield wiper arm having a driving head (1) and a driving shaft borne by a fixed component (12),
**characterised in that** a positioning sleeve (22) comprising at least a first positioning means (23) and a second positioning means (24) is provided between the driving head (1) and the fixed component (12),
**in that** the first positioning means (23) cooperates with the driving head,
**and in that** the second positioning means (24) cooperates with the fixed component (12) so that the said second positioning means (24) can be detached from the positioning sleeve (22) when the windshield wiper arm is in operation.

2. A link according to Claim 1,
**characterised in that** the sleeve (22) comprises a third positioning means (35).

3. A link according to any one of the preceding Claims,
**characterised in that** the second positioning means cooperates with the bearing support (12) of the driving shaft (11).

4. A link according to one of Claims 2 to 3,
**characterised in that** the third positioning means (35) cooperates with the driving shaft (11).

5. A link according to one of the preceding Claims,
**characterised in that** the positioning means (23, 24, 35) are formed by projections (28, 31, 36) cooperating with seats (30, 32, 37).

6. A link according to Claim 5,
**characterised in that** the projections (28, 31, 36) are borne by the positioning sleeve (22).

7. A link according to one of Claims 5 or 6,
**characterised in that** the seats (30, 32) are borne by the driving head (1) and the fixed component (22) respectively.

8. A link according to one of Claims 5 to 7,
**characterised in that** the seat (37) is borne by the driving shaft (11).

## Patentansprüche

1. Verbindungsglied zwischen einem scheibenwischerarm mit einem Antriebskopf (1) und einer Antriebswelle, die an einem feststehenden Element (12) angebracht ist, **dadurch gekennzeichnet,** daß eine Positionierhülse (22), die mindestens ein erstes Positioniermittel (23) und ein zweites Positioniermittel (24) umfaßt, zwischen dem Antriebskopf (1) und dem feststehenden Element (12) vorgesehen ist, daß das erste Positioniermittel (23) mit dem Antriebskopf zusammenwirkt und daß das zweite Positioniermittel (24) mit dem feststehenden Element (12) zusammenwirkt, wobei das zweite Positioniermittel (24) von der Positionierhülse (22) ablösbar ist, wenn sich der Scheibenwischerarm (22) in Betrieb befindet.

2. Verbindungsglied nach Anspruch 1, **dadurch gekennzeichnet,** daß die Positionierhülse (22) ein drittes Positioniermittel (35) umfaßt.

3. Verbindungsglied nach einem der vorangehenden Ansprüche, **dadurch gekennzeichnet**, daß das zweite Positioniermittel mit dem Lagerträger (12) der Antriebswelle (11) zusammenwirkt.

4. Verbindungsglied nach einem der Ansprüche 2 bis 3, **dadurch gekennzeichnet,** daß das dritte Positioniermittel (35) mit der Antriebswelle (11) zusammenwirkt.

5. Verbindungsglied nach einem der vorangehenden Ansprüche, **dadurch gekennzeichnet**, daß die Positioniermittel (23, 24, 35) aus Vorsprüngen (28, 31, 36) bestehen, die mit Aufnahmen (30, 32, 37) zusammenwirken.

6. Verbindungsglied nach Anspruch 5, **dadurch gekennzeichnet,** daß die Vorsprünge (28, 31, 36) an der Positionierhülse (22) angebracht sind.

7. Verbindungsglied nach einem der Ansprüche 5 oder 6, **dadurch gekennzeichnet**, daß die Aufnahmen (30, 32) am Antriebskopf (1) bzw. an dem feststehenden Element (12) angebracht sind.

8. Verbindungsglied nach einem der Ansprüche 5 bis 7, **dadurch gekennzeichnet**, daß die Aufnahme (37) an der Antriebswelle (11) angebracht ist.
